# EUROPÄISCHE PATENTSCHRIFT

(11) **EP 2 759 845 B1**
(45) Veröffentlichungstag und Bekanntmachung des Hinweises auf die Patenterteilung: **16.09.2015**
(21) Anmeldenummer: 13152836.6
(22) Anmeldetag: 28.01.2013
(51) Int. Cl.: G01S 7/481

(54) **Optoelektronischer Sensor**
Optoelectronic sensor
Capteur optoélectronique

(43) Veröffentlichungstag der Anmeldung: 30.07.2014
(73) Patentinhaber: SICK AG, 79183 Waldkirch/Breisgau (DE)
(72) Erfinder: Jachmann, Dr. Fabian, 10967 Berlin (DE); Krämer, Joachim, 79249 Merzhausen (DE)
(74) Vertreter: Manitz, Finsterwald & Partner GbR

(56) Entgegenhaltungen:
- EP-A1- 1 262 736
- EP-A1- 1 890 168
- DE-C1- 19 732 776
- GB-A- 1 376 106
- US-A- 4 123 651
- US-A1- 2002 143 506
- US-A1- 2007 008 514

## Beschreibung

Die vorliegende Erfindung betrifft einen optoelektronischen Sensor mit einem Lichtsender zum Aussenden eines Lichtstrahlenbündels in einen Überwachungsbereich, einem Lichtempfänger zum Erzeugen eines Empfangssignals aus dem von Objekten in den Überwachungsbereich remittierten Lichtstrahlenbündel, einer um eine Rotationsachse rotierbaren Ablenkeinheit, welche eine konkave erste Reflexionsfläche zur Strahlformung und Umlenkung des remittierten Lichtstrahlenbündels aufweist, und einer Auswerteeinheit, die dafür ausgebildet ist, aus dem Empfangssignal Informationen über die Objekte in den Überwachungsbereich zu gewinnen.

Optische Sensoren, die auch unter dem Begriff "Laserscanner" bekannt sind, werden in verschiedenen Anwendungen zur Objekterfassung eingesetzt. Ein von dem Lichtsender, insbesondere einem Laser, erzeugtes Lichtstrahlenbündel wird in den Überwachungsbereich ausgesandt. Insbesondere kann das Lichtstrahlenbündel den Überwachungsbereich mit Hilfe der rotierenden Ablenkeinheit oder synchron zu dieser periodisch überstreichen. Das Lichtstrahlenbündel wird an Objekten, die sich innerhalb des Überwachungsbereichs befinden, in Richtung des Sensors remittiert und mithilfe der Ablenkeinheit, welche in Abhängigkeit von ihrer Winkelstellung einen bestimmten Winkelbereich des Überwachungsbereichs erfasst, in Richtung des Lichtempfängers umgelenkt und von diesem erfasst. Das von dem Lichtempfänger erzeugte Empfangssignal wird von der Auswerteeinheit ausgewertet, um Information über die Objekte, insbesondere über deren Position in Bezug auf den Sensor zu gewinnen. Bei der Gewinnung dieser Informationen wird insbesondere die Winkelstellung der Ablenkeinheit, die einen Rückschluss auf die Winkellage des Objekts ermöglicht, und gegebenenfalls die Lichtlaufzeit des Lichtstrahlenbündels, die einen Rückschluss auf die Entfernung des Objekts von dem Sensor erlaubt, berücksichtigt. Die Lichtlaufzeit kann in grundsätzlich bekannter Weise auf der Grundlage einer Phasenverschiebung zwischen dem gesendeten amplitudenmodulierten Licht und dem empfangenen Licht oder durch Messung der Laufzeit eines ausgesandten Lichtpulses ermittelt werden.

Bei einer allgemein bekannten Bauart eines solchen Laserscanners wird eine Ablenkeinheit mit einer Empfangsoptik rotiert, deren optische Achse senkrecht zur Rotationsachse ausgerichtet ist. Das empfangene Lichtstrahlenbündel wird mit Hilfe eines um 45° zur optischen Achse der Empfangslinse geneigten Spiegels in Richtung der Rotationsachse umgelenkt und von einem zumeist ortsfesten Lichtempfänger detektiert.

Bei einem gattungsgemäßen optoelektronischen Sensor, wie er beispielsweise in der EP 2 378 309 B1 beschrieben ist, umfasst die Ablenkeinheit einen rotierenden Hohlspiegel, welcher das remittierte Lichtstrahlenbündel direkt auf den Lichtempfänger fokussiert. Ähnliche Sensoren mit einem rotierenden Hohlspiegel sind auch in EP 2 237 063 B1, US 2009/0122294 A1, GB 1 376 106 A, US 2002/0143506 A1 und EP 1 860 168 A1 beschrieben. Eine Sensoranordnung mit konkaven und konvexen Hohlspiegeln ist in EP 1 262 736 A1 gezeigt.

Es ist die Aufgabe der vorliegenden Erfindung, einen verbesserten optoelektronischen Sensor der eingangs genannten Art anzugeben.

Die Lösung der Aufgabe erfolgt durch einen optoelektronischen Sensor mit den Merkmalen des Anspruchs 1. Erfindungsgemäß ist vorgesehen, dass die rotierbare Ablenkeinheit eine zweite Reflexionsfläche zur Umlenkung des von der ersten Reflexionsfläche umgelenkten Lichtstrahlenbündels zu dem Lichtempfänger aufweist. Da die zweite Reflexionsfläche Bestandteil der Ablenkeinheit ist, ist diese ebenfalls um die Rotationsachse rotierbar. Dadurch wird eine verbesserte Strahlführung des remittierten Lichts in Richtung auf den Lichtempfänger erzielt. Ein weiterer Vorteil besteht darin, dass der für die Ablenkeinheit zur Verfügung stehende Bauraum effektiver ausgenützt wird. Bei der eingangs genannten herkömmlichen Bauweise der Ablenkeinheit, welche aus einer Empfangslinse und einem Umlenkspiegel besteht, wäre zur Erhöhung der Lichtempfindlichkeit eine Vergrößerung sowohl der Linse als auch des Spiegels notwendig, was wiederum den Bauraum vergrößert und aufgrund der erforderlichen stabilen mechanischen Aufhängung einen erhöhten Aufwand bedingt.

Um eine optimale Fokussierung des remittierten Lichtstrahlenbündels zu erreichen, ist die erste Reflexionsfläche vorzugsweise in zwei Raumrichtungen gekrümmt. Der Lichtempfänger und gegebenenfalls auch der Lichtsender können ortsfest, d.h. nicht rotierbar, angeordnet werden.

Gemäß einer vorteilhaften Ausführungsform der Erfindung ist die zweite Reflexionsfläche gekrümmt, insbesondere konvex. Somit erfüllt auch die zweite Reflexionsfläche eine strahlformende Funktion, so dass die erste und die zweite Reflexionsfläche zusammen ein optisches System bilden. Dadurch kann auf die Verwendung von zusätzlichen Empfangsoptiken in der Ablenkeinheit verzichtet werden. Die zweite Reflexionsfläche ist vorzugsweise ebenfalls in zwei Raumrichtungen gekrümmt. Somit kann eine große Apertur und eine hohe Empfindlichkeit für das remittierte Lichtstrahlenbündel realisiert werden.

Gemäß einer weiteren vorteilhaften Ausführungsform sind die erste und die zweite Reflexionsfläche starr miteinander verbunden. Insbesondere bei der vorstehend genannten vorteilhaften Ausführungsform, bei welcher beide Reflexionsflächen ein strahlformendes System bilden, wird dadurch die Empfindlichkeit der optischen Eigenschaften gegenüber Schwingungen und/oder Dejustage vermindert. Durch den Wegfall der Justage zwischen den beiden Reflexionsflächen werden zudem die Herstellungskosten verringert.

Erfindungsgemäß weisen die erste und die zweite Reflexionsfläche eine jeweilige Brennweite auf, wobei die genannten Brennweiten derart gewählt sind, dass ein auf die erste Reflexionsfläche auftreffendes paralleles Eintrittslichtstrahlenbündel durch die zweite Reflexionsfläche in ein ebenfalls paralleles Austrittslichtstrahlenbündel umgelenkt wird. Da zumindest für entfernte Objekte das Austrittslichtstrahlenbündel die Ablenkeinheit als paralleles Strahlenbündel verlässt, wirken sich etwaige Toleranzen oder ein mechanisches Spiel zwischen der Ablenkeinheit und dem Lichtempfänger weniger stark auf die Empfindlichkeit und/oder Genauigkeit des Sensors aus. Eine derartige Anordnung entspricht dem Prinzip eines Galilei-Fernrohrs. Die Brennweiten der beiden Reflexionsflächen können insbesondere so gewählt werden, dass ihre Beträge gleich sind. In der Regel werden die Brennweiten so gewählt, dass der Durchmesser des Austrittslichtstrahlenbündels kleiner als der Durchmesser des Eintrittslichtstrahlenbündels ist.

Es ist von Vorteil, wenn sich ein auf die erste Reflexionsfläche auftreffendes Eintrittslichtstrahlenbündel und ein von der zweiten Reflexionsfläche umgelenktes Austrittslichtstrahlenbündel sich entlang eines jeweiligen Teilabschnitts der optischen Achse der Ablenkeinheit ausbreiten, und die erste und die zweite Reflexionsfläche derart zueinander ausgerichtet sind, dass der dem Eintrittslichtstrahlenbündel zugeordnete Teilabschnitt der optischen Achse und der dem Austrittslichtstrahlenbündel zugeordnete Teilabschnitt der optischen Achse in einem rechten Winkel zueinander stehen. Die optische Achse bzw. deren Teilabschnitte entsprechen hier der Hauptausbreitungsrichtung eines von der Ablenkeinheit erfassten Lichtstrahlenbündels. Die Ablenkeinheit bewirkt somit eine Umlenkung des remittierten Lichtstrahlenbündels um 90°.

Vorteilhafterweise verläuft der dem Austrittslichtstrahlenbündel zugeordnete Teilabschnitt der optischen Achse parallel zur Rotationsachse. Die Anordnung der beiden Reflexionsflächen kann dabei derart erfolgen, dass der dem Austrittslichtstrahlenbündel zugeordnete Teilabschnitt von der Rotationsachse beabstandet ist oder auch mit dieser zusammenfällt.

Gemäß einer vorteilhaften Ausgestaltung der Erfindung ist zwischen der zweiten Reflexionsfläche und dem Lichtempfänger eine Empfangsoptik angeordnet, welche das von der zweiten Reflexionsfläche umgelenkte Lichtstrahlenbündel auf den Lichtempfänger fokussiert. Dies ist insbesondere dann vorteilhaft, wenn das vorstehend genannte Austrittslichtstrahlenbündel einen parallelen Verlauf aufweist. Die eigentliche Fokussierung auf den Lichtempfänger erfolgt dann nicht in der Ablenkeinheit, sondern durch die genannte Empfangsoptik. Bei einem parallelen Austrittslichtstrahlenbündel braucht die Justage oder Positionierung der Empfangsoptik relativ zur Ablenkeinheit insbesondere in axialer Richtung nur mit relativ geringer Genauigkeit erfolgen. Die Toleranz gegenüber einem mechanischen Spiel eines Antriebs der Ablenkeinheit erhöht sich dadurch ebenfalls.

Vorteilhafterweise fällt die optische Achse der Empfangsoptik mit der Rotationsachse zusammen. Bevorzugt liegt der Detektor ebenfalls auf der optischen Achse der Empfangsoptik bzw. der Rotationsachse. Dadurch ist eine optimale Fokussierung des remittierten Lichtstrahlenbündels auf den Lichtempfänger unabhängig von der Winkelstellung der Ablenkeinheit gewährleistet.

Gemäß einer Weiterbildung der Erfindung weist die Ablenkeinheit ferner eine dritte Reflexionsfläche zur Umlenkung des von dem Lichtsender ausgesandten Lichtstrahlenbündels in den Überwachungsbereich auf, wobei die Rotationsachse insbesondere durch die dritte Reflexionsfläche hindurch verläuft, bevorzugt unter einem Winkel von 45°. Somit übernimmt die Ablenkeinheit gleichzeitig die Funktion, das ausgesandte Lichtstrahlenbündel in den von dem Lichtempfänger überwachten Raumwinkel umzulenken. Dadurch kann der Lichtsender ortsfest angeordnet werden, wodurch sich der bauliche Aufwand deutlich verringert. Insbesondere vermindert sich dadurch die rotierende Masse.

Die Anordnung von Lichtsender und dritter Reflexionsfläche wird vorzugsweise so gewählt, dass das vom Lichtsender ausgesandte Lichtstrahlenbündel entlang der Rotationsachse emittiert wird, so dass eine optimale Symmetrie gegeben ist. Die dritte Reflexionsfläche ist zum Beispiel plan, kann aber auch konvex oder konkav gekrümmt sein, um zusätzlich zur Umlenkfunktion eine strahlformende Funktion zu übernehmen.

Erfindungsgemäß umfasst die Ablenkeinheit einen monolithischen Körper, wobei die erste Reflexionsfläche eine erste Wandung des Körpers und die zweite Reflexionsfläche eine der ersten Wandung bevorzugt gegenüberliegende zweite Wandung des Körpers umfasst. Hierdurch wird eine besonders starre und insbesondere schwingungsunempfindliche Positionierung der beiden Reflexionsflächen zueinander erreicht.

Erfindungsgemäß ist der Körper transparent und derart geformt, dass das Lichtstrahlenbündel zumindest zwischen der ersten und zweiten Reflexionsfläche im Inneren des Körpers verläuft. Hierbei tritt also das Lichtstrahlenbündel zunächst in den transparenten Körper ein, wird dann an einer Innenwandung des Körpers, welche die erste Reflexionsfläche bildet, umgelenkt und anschließend von einer weiteren Innenwandung des Körpers, welche die zweite Reflexionsfläche bildet, umgelenkt.

Gemäß einer weiteren vorteilhaften Ausführungsform der Erfindung weist die Ablenkeinheit ferner eine dritte Reflexionsfläche zur Umlenkung des von dem Lichtsender ausgesandten Lichtstrahlenbündels in den Überwachungsbereich auf, wobei die dritte Reflexionsfläche an einer dritten Wandung des Körpers vorgesehen ist. Die dritte Reflexionsfläche ist auf diese Weise starr mit der ersten und zweiten Reflexionsfläche verbunden, so dass keine Gefahr einer Dejustage der dritten Reflexionsfläche vorliegt. Es ist gewährleistet, dass das von dem Lichtsender ausgesandte Lichtstrahlenbündel stets in dieselbe Richtung gelenkt wird, in welche eine aus der ersten und zweiten Reflexionsfläche, dem Lichtempfänger und gegebenenfalls der Empfangsoptik bestehende Erfassungseinheit "blickt".

Vorteilhafterweise umfasst die erste, die zweite und/oder die dritte Reflexionsfläche eine auf der jeweils zugeordneten Wandung aufgebrachte reflektierende Beschichtung. Die Beschichtung verstärkt die reflektierenden Eigenschaften der entsprechenden Wandung des Körpers. Je nach Auftreffwinkel des Lichtstrahlenbündels kann eine Reflexionsfläche aber auch unbeschichtet sein, insbesondere dann, wenn der Auftreffwinkel des Lichtstrahlenbündels so gewählt ist, dass dieser mittels Totalreflexion reflektiert wird.

Gemäß einer weiteren vorteilhaften Ausführungsform kann der transparente Körper ferner ein strahlformendes Lichteintrittsfenster für das remittierte Lichtstrahlenbündel und/oder ein strahlformendes Lichtaustrittsfenster für das remittierte Lichtstrahlenbündel aufweisen. Je nach ihrer Krümmung können die strahlformenden Lichteintrittsfenster bzw. Lichtaustrittsfenster sammelnde oder zerstreuende Eigenschaften aufweisen.

Weitere vorteilhafte Ausführungsformen der Erfindung sind in den Unteransprüchen, der Beschreibung und den Zeichnungen genannt.

Die Erfindung wird nachfolgend anhand von Ausführungsbeispielen mit Bezug auf die Zeichnungen beschrieben. Es zeigen:
- Fig. 1: eine schematische Schnittansicht eines optoelektronischen Sensors gemäß einem Ausführungsbeispiel mit einer Ablenkeinheit gemäß einem nicht entsprechend dieser Erfindung ausgestalteten, ersten Ausführungsbeispiel,
- Fig. 2: eine Seitenansicht, eine Draufsicht und eine Frontansicht einer Ablenkeinheit für den Sensor gemäß einem erfindungsgemäßen, zweiten Ausführungsbeispiel,
- Fig. 3: eine schematische Schnittansicht einer Ablenkeinheit für den Sensor gemäß einem erfindungsgemäßen, dritten Ausführungsbeispiel, und
- Fig. 4: eine schematische Schnittansicht einer Ablenkeinheit für den Sensor gemäß einem erfindungsgemäßen, vierten Ausführungsbeispiel.

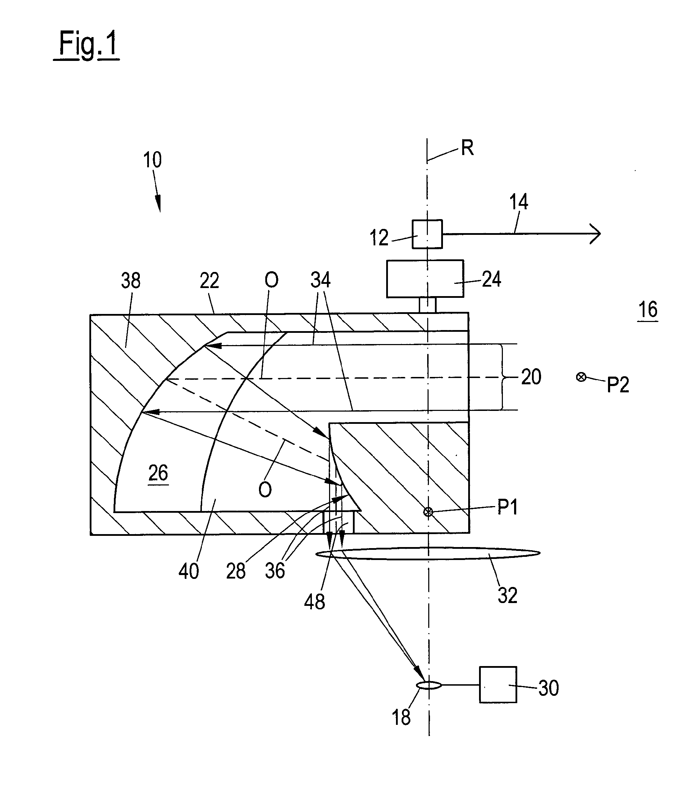

Ein optoelektronischer Sensor 10 umfasst gemäß Fig. 1 einen Lichtsender 12, welcher ein paralleles oder divergentes Lichtstrahlenbündel 14 in einen (hier nur schematisch und nicht maßstabsgetreu eingezeichneten) Überwachungsbereich 16 aussendet.

Das ausgesandte Lichtstrahlenbündel 14 wird von gegebenenfalls im Überwachungsbereich 16 vorhandenen Objekten (nicht dargestellt) remittiert und trifft als remittiertes Lichtstrahlenbündel 20 auf eine Ablenkeinheit 22. Die Ablenkeinheit 22 ist um eine Rotationsachse R rotierbar und wird dazu von einem Antrieb 24 angetrieben.

Die Ablenkeinheit 22 umfasst eine konkave erste Reflexionsfläche 26, welche vorzugsweise in zwei Raumrichtungen parabolisch gekrümmt ist und einen Brennpunkt P1 aufweist. Die erste Reflexionsfläche 26 "blickt" in Richtung des Überwachungsbereichs 16.

Die Schnittebene der Fig. 1 liegt in einer Symmetrieebene der Ablenkeinheit, so dass man auf eine Hälfte der reflektierenden Fläche 26 sieht, die hinter der Figurenebene liegt.

Der ersten Reflexionsfläche 26 gegenüberliegend ist eine konvex gekrümmte zweite Reflexionsfläche 28 angeordnet, welche vorzugsweise ebenfalls parabolisch in zwei Raumrichtungen gekrümmt ist und einen virtuellen Brennpunkt P2 aufweist. Die Reflexionsflächen 26, 28 sind in axialer Richtung etwas zueinander versetzt, wobei der Versatz so gewählt ist, dass sowohl eine möglichst geringe Bauhöhe der Ablenkeinheit 22 in axialer Richtung als auch eine möglichst geringe Verschattung des Erfassungsbereichs der ersten Reflexionsfläche 26 durch die zweite Reflexionsfläche 28 gegeben ist.

Der Sensor 10 umfasst ferner eine Empfangsoptik 32, deren optische Achse mit der Rotationsachse R zusammenfällt. Im Brennpunkt der Empfangsoptik 32 ist ein Lichtempfänger 18 angeordnet, welcher aus dem empfangenen remittierten Lichtstrahlenbündel 20 ein Empfangssignal erzeugt und an eine Auswerteeinheit 30 übermittelt. Die Auswerteeinheit 30 ist dafür ausgebildet, aus dem Empfangssignal Informationen über die Objekte in dem Überwachungsbereich 16 zu gewinnen. Insbesondere ist die Auswerteeinheit 30 dafür ausgebildet, in für Laserscanner an sich bekannter Weise die Winkelstellung der Ablenkeinheit 22 zu detektieren und die Laufzeit des von dem Lichtempfänger 18 empfangenen Lichtstrahlenbündels zu ermitteln. Aus der Winkelstellung und der Laufzeit kann die Position eines von dem Sensor 10 erfassten Objekts in an sich bekannter Weise ermittelt werden.

Das von einem Objekt remittierte Lichtstrahlenbündel 20 tritt entlang einer Haupterfassungs- oder Hauptausbreitungsrichtung durch die Ablenkeinheit 22 hindurch, wobei die Haupterfassungsrichtung entlang der gestrichelt angedeuteten optischen Achse O der Ablenkeinheit 22 verläuft. Nachfolgend wird das auf die erste Reflexionsfläche 26 auftreffende Lichtstrahlenbündel als Eintrittslichtstrahlenbündel 34 und das von der zweiten Reflexionsfläche 28 umgelenkte Lichtstrahlenbündel als Austrittslichtstrahlenbündel 36 bezeichnet.

Das Eintrittslichtstrahlenbündel 34 tritt als annähernd paralleles Strahlenbündel entlang eines senkrecht zur Rotationsachse R verlaufenden Teilabschnitts der optischen Achse O in die Ablenkeinheit 22 ein und wird von der ersten Reflexionsfläche 26 in Richtung auf die zweite Reflexionsfläche 28 reflektiert, wobei es bei dieser Ausführungsform in ein konvergentes Lichtstrahlenbündel umgeformt wird. Dieses konvergente Lichtstrahlenbündel trifft unter einem relativ flachen Winkel auf die zweite Reflexionsfläche 28, wird von dieser in Richtung auf die Empfangsoptik 32 reflektiert und aufgrund der konvexen Krümmung der zweiten Reflexionsfläche 28 in das parallele Austrittslichtstrahlenbündel 36 umgeformt, welches sich entlang eines parallel und beabstandet zur Rotationsachse R verlaufenden Teilabschnitts der optischen Achse O ausbreitet.

Das aus der Ablenkeinheit 22 austretende Austrittslichtstrahlenbündel 36 trifft auf die Empfangsoptik 32 und wird von dieser auf den Lichtempfänger 18 fokussiert. Aufgrund des Abstands zwischen dem Austrittslichtstrahlenbündel 36 und der Rotationsachse R überstreicht das Austrittslichtstrahlenbündel 36 während einer Umdrehung der Ablenkeinheit 22 einen ringförmigen Bereich der Empfangsoptik.

Aufgrund der Parallelität des Austrittslichtstrahlenbündels 36 und seinem parallelen Verlauf in Bezug auf die Rotationsachse R ist die Fokuslage des remittierten Lichtstrahlenbündels 20 bezüglich des Lichtempfängers 18 weitgehend unabhängig gegenüber einer Variation des axialen Abstands zwischen der Ablenkeinheit 22 und der Empfangsoptik 32. Somit erweist sich der Sensor 10 als relativ unempfindlich gegenüber etwaigen Justierungenauigkeiten und stellt an den Antrieb 24 und die Lagerung der rotierenden Ablenkeinheit 22 hinsichtlich der mechanischen Präzision nur geringe Anforderungen.

Nachfolgend werden verschiedene Ausgestaltungen der Ablenkeinheit anhand von Ausführungsbeispielen erläutert. Aus Gründen der Übersichtlichkeit werden Elemente, die bei allen Ausführungsbeispielen gleich sind, mit gleichen Bezugszeichen bezeichnet.

Bei der Ausgestaltung gemäß einem ersten Ausführungsbeispiel (Fig. 1) umfasst die Ablenkeinheit 22 einen monolithischen Körper 38, welcher im Bereich der Strahlengänge eine Ausnehmung 40 aufweist. Der Körper 38 kann beispielsweise als Spritzgussbauteil hergestellt sein. Die Reflexionsflächen 26, 28 sind durch einander gegenüberliegende Außenwandungen des Körpers 38 gebildet. Zur Verbesserung der Reflexionseigenschaften sind die Reflexionsflächen 26, 28 mit einer reflektierenden Beschichtung, beispielsweise einer Metallbedampfung, versehen. Um einen ungehinderten Lichtaustritt des Austrittslichtstrahlenbündels 36 zu gewährleisten, weist der Körper 38 im Bereich des Austrittslichtstrahlenbündels 36 eine Öffnung 48 ausreichender Größe auf. Aus Festigkeitsgründen kann anstelle der Öffnung 48 auch ein transparenter Teilabschnitt des Körpers vorgesehen sein.

In einer nicht dargestellten Abwandlung der Ablenkeinheit 22 von Fig. 1 kann die Ablenkeinheit einen mit den Antrieb 24 gekoppelten Träger aufweisen, auf welchem ein Substrat, welches die erste Reflexionsfläche 26 aufweist, und ein weiteres Substrat, welches die zweite Reflexionsfläche 28 aufweist, befestigt sind.

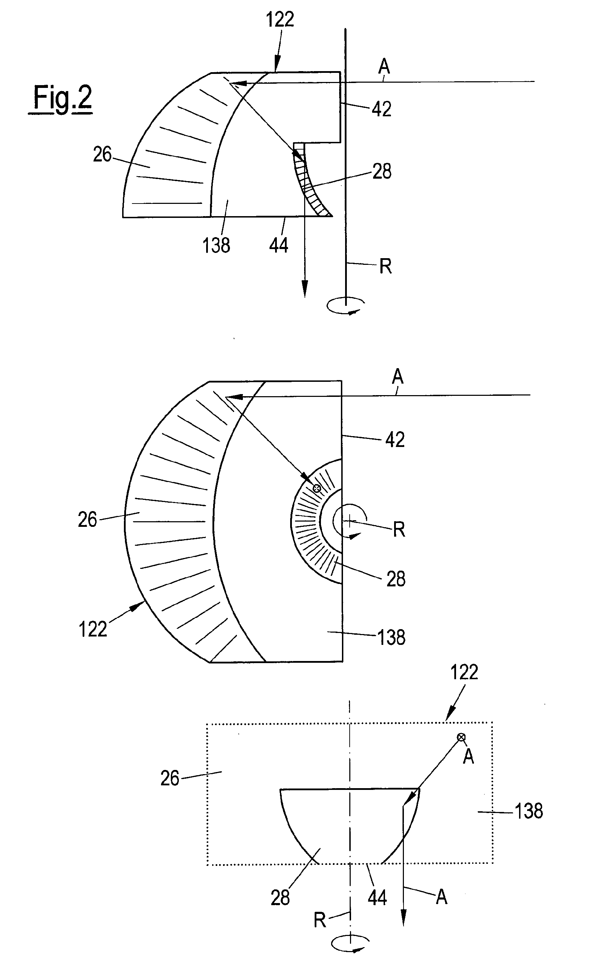

Fig. 2 zeigt eine Ablenkeinheit 122 gemäß einem zweiten Ausführungsbeispiel, welche bei dem Sensor 10 gemäß Fig. 1 anstelle der Ablenkeinheit 22 zum Einsatz gelangen kann.

Die Ablenkeinheit 122 umfasst einen monolithischen Körper 138, welcher aus einem transparenten Werkstoff hergestellt ist.

Der Körper 138 weist eine erste Reflexionsfläche 26 und eine zweite Reflexionsfläche 28 auf, welche in gleicher Weise wie bei der Ablenkeinheit 22 von Fig. 1 angeordnet und ausgerichtet sind.

Der obere Teil von Fig. 2 zeigt eine Seitenansicht der Ablenkeinheit 122. Im mittleren Teil von Fig. 2 ist die Ablenkeinheit 122 in Draufsicht gezeigt, während der untere Teil eine Frontansicht aus Richtung des Überwachungsbereichs 16 (Fig. 1) darstellt. Zur Veranschaulichung sind die Reflexionsflächen 26, 28 im oberen und mittleren Teil von Fig. 2 schraffiert dargestellt. Man sieht dabei jeweils auf eine von außen auf den transparenten Körper 138 aufgebrachte reflektierende Beschichtung.

Der Verlauf des remittierten Lichtstrahlenbündels ist in Fig. 2 durch die Ausbreitungsrichtung A eines einzelnen Lichtstrahls des remittierten Lichtstrahlenbündels repräsentiert.

Das remittierte Lichtstrahlenbündel tritt im Bereich eines Eintrittsfensters 42 in den Körper 138 ein, trifft dort auf die erste Reflexionsfläche 26, welche durch eine Innenwandung des transparenten Körpers 138 gebildet ist. Zur Verbesserung der Reflexionseigenschaften können - wie vorstehend erwähnt - die Außenseiten des Körpers 138 im Bereich der Reflexionsflächen 26, 28 mit einer reflektierenden Beschichtung, beispielsweise einer Metallbedampfung, versehen sein.

Das von der ersten Reflexionsfläche 26 reflektierte und konvergent umgeformte Lichtstrahlenbündel trifft auf eine gegenüberliegende Innenwandung des Körpers 138, welche die zweite Reflexionsfläche 28 bildet. Aufgrund des relativ geringen Auftreffwinkels des Lichtstrahlenbündels 20 auf die zweite Reflexionsfläche 28 kann wegen der hierbei stattfindenden Totalreflexion auf eine entsprechende Beschichtung der zweiten Reflexionsfläche 28 auch verzichtet werden.

Nach der Reflexion und der Umformung zu einem nun wieder parallelen Lichtstrahlenbündel an der Reflexionsfläche 28 verlässt das Lichtstrahlenbündel den transparenten Körper 138 im Bereich eines Austrittsfensters 44.

Das Eintrittsfenster 42 und/oder das Austrittsfenster 44 können mit einer Antireflexbeschichtung versehen sein.

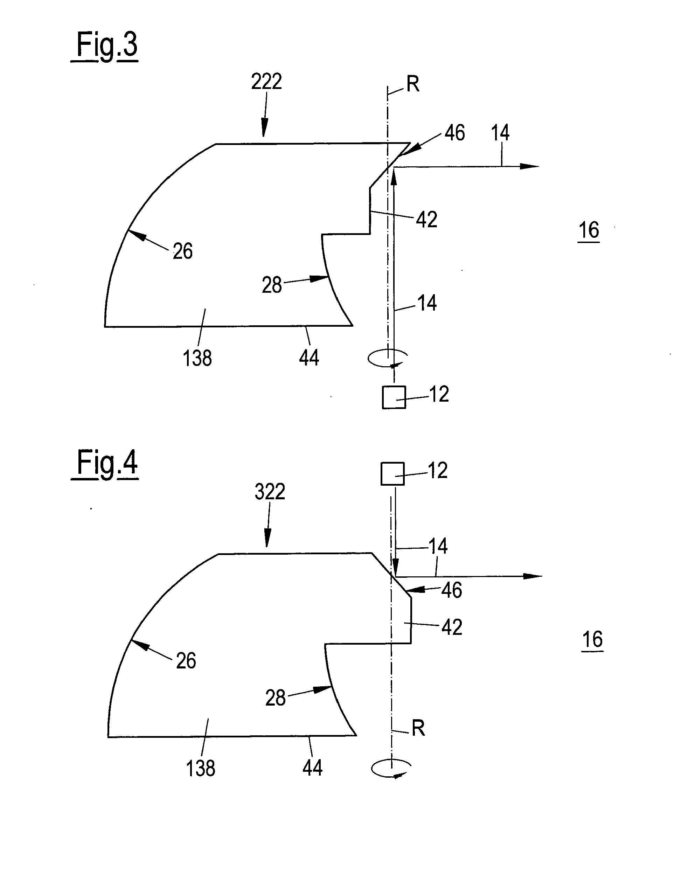

In Fig. 3 und 4 sind Ablenkeinheiten 222 bzw. 322 gemäß einem dritten und vierten Ausführungsbeispiel dargestellt, die in ihrem Grundaufbau und bezüglich der Umlenkung des remittierten Lichtstrahlenbündels der Ablenkeinheit 122 von Fig. 2 entsprechen. Gezeigt sind hier vereinfachte Schnittansichten.

Die Ablenkeinheiten 222, 322 umfassen demgemäß einen transparenten Körper 138, welcher eine erste Reflexionsfläche 26, eine zweite Reflexionsfläche 28, ein Eintrittsfenster 42 und ein Austrittsfenster 44 aufweist. Sowohl das Eintrittsfenster 42 als auch das Austrittsfenster 44 können plan sein oder als strahlformendes Element mit konvexer oder konkaver Krümmung ausgebildet sein.

Zusätzlich weisen die Ablenkeinheiten 222, 322 im Bereich des Eintrittsfensters 42 eine plane dritte Reflexionsfläche 46 auf, welche durch eine Außenwandung des transparenten Körpers 138 gebildet wird. Die dritte Reflexionsfläche 46 schneidet die Rotationsachse R unter einem Winkel von 45° und ist vorzugsweise mit einer reflektierenden Beschichtung versehen.

Ein von dem Lichtsender 12 ausgesandtes Lichtstrahlenbündel 14 verlässt den Lichtsender 12 zunächst entlang der Rotationsachse R. Nach dem Auftreffen auf die dritte Reflexionsfläche 46 wird das Lichtstrahlenbündel 14 um 90° in Richtung des Überwachungsbereichs 16 umgelenkt.

Die Ablenkeinheiten 222, 322 unterscheiden sich voneinander lediglich durch die Richtung, aus welcher das von dem Lichtsender 12 remittierte Lichtstrahlenbündel 14 auf die dritte Reflexionsfläche 46 auftreffen muss.

Bei einer Anordnung der Ablenkeinheit 222 (Fig. 3) in dem Sensor 10 ist der Lichtsender 12 im Bereich der Empfangsoptik 32 angeordnet. Vorteilhafterweise erfolgt eine Integration in die Empfangsoptik 32, da der zentrale Bereich der Empfangsoptik 32 für die Fokussierung des Austrittslichtstrahlenbündels 36 nicht zwingend benötigt wird.

Bei Verwendung der Ablenkeinheit 322 (Fig. 4) mit dem Sensor 10 wird der Lichtsender 12 hingegen im Bereich des Antriebs 24 angeordnet. Um einen ungehinderten Zutritt des vom Lichtsender 12 ausgesandten Lichtstrahlenbündels 14 zu der dritten Reflexionsfläche 46 zu gewährleisten, kann der Antrieb 24 mit der Ablenkeinheit 322 beispielsweise über eine Hohlwelle gekoppelt werden, in deren Inneren das Lichtstrahlenbündel 14 geführt wird. Diese Anordnung dient auch einer besseren Trennung zwischen dem Sendelichtpfad und dem Empfangslichtpfad und reduziert so ein Übersprechen zwischen den beiden Lichtpfaden.

Eine dritte Reflexionsfläche für das ausgesandte Lichtstrahlenbündel 14 kann nicht nur, wie in Fig. 3 und 4 dargestellt, bei einer Ablenkeinheit mit einem transparenten Körper vorgesehen werden, sondern auch bei der Ablenkeinheit 22 gemäß Fig. 1. Auch bei der mit Bezug auf Fig. 1 beschriebenen Abwandlung, bei welcher die Reflexionsflächen 26, 28 auf separate, an einem Träger befestigte Substrate ausgeführt sind, kann eine entsprechende dritte Reflexionsfläche für das ausgesandte Lichtstrahlenbündel 14 in Form eines weiteren, auf dem Träger montierten Substrats vorgesehen werden.

Der Vorteil einer an der Ablenkeinheit 22, 222, 322 vorgesehenen dritten Reflexionsfläche 46 für das ausgesandte Lichtstrahlenbündel 14 besteht darin, dass selbst bei einer möglichen Verkippung der Ablenkeinheit 22, 222, 322 der Lichtsender 12 und die aus Empfangsoptik 32 und Lichtempfänger 18 gebildete Empfangseinheit stets relativ zueinander korrekt ausgerichtet sind, d.h. weiterhin in denselben Teil des Überwachungsbereichs 16 "blicken".

### Bezugszeichenliste

- 10: Sensor
- 12: Lichtsender
- 14: ausgesandtes Lichtstrahlenbündel
- 16: Überwachungsbereich
- 18: Lichtempfänger
- 20: remittiertes Lichtstrahlenbündel
- 22, 122, 222, 322: Ablenkeinheit
- 24: Antrieb
- 26: erste Reflexionsfläche
- 28: zweite Reflexionsfläche
- 30: Auswerteeinheit
- 32: Empfangsoptik
- 34: Eintrittslichtstrahlenbündel
- 36: Austrittslichtstrahlenbündel
- 38, 138: Körper
- 40: Ausnehmung
- 42: Eintrittsfenster
- 44: Austrittsfenster
- 46: dritte Reflexionsfläche
- 48: Öffnung

- A: Ausbreitungsrichtung
- O: optische Achse
- P1, P2: Brennpunkt
- R: Rotationsachse

## Patentansprüche

1. Optoelektronischer Sensor (10) mit
einem Lichtsender (12) zum Aussenden eines Lichtstrahlenbündels (14) in einen Überwachungsbereich (16),
einem Lichtempfänger (18) zum Erzeugen eines Empfangssignals aus dem von Objekten in dem Überwachungsbereich (16) remittierten Lichtstrahlenbündel (20),
einer um eine Rotationsachse (R) rotierbaren Ablenkeinheit (22, 122, 222, 322), welche eine konkave erste Reflexionsfläche (26) zur Strahlformung und Umlenkung des remittierten Lichtstrahlenbündels (20) aufweist, und einer Auswerteeinheit (30), die dafür ausgebildet ist, aus dem Empfangssignal Informationen über die Objekte in dem Überwachungsbereich (16) zu gewinnen,
wobei die rotierbare Ablenkeinheit (22, 122, 222, 322) eine zweite Reflexionsfläche (28) zur Umlenkung des von der ersten Reflexionsfläche (26) umgelenkten Lichtstrahlenbündels (20) zu dem Lichtempfänger (18) aufweist,
**dadurch gekennzeichnet,**
**dass** die Ablenkeinheit (22, 122, 222, 322) einen monolithischen Körper (138) umfasst, wobei die erste Reflexionsfläche (26) eine erste Wandung des Körpers (138) und die zweite Reflexionsfläche (28) eine der ersten Wandung gegenüberliegende zweite Wandung des Körpers (138) umfasst,
**dass** der Körper (138) transparent ist und derart geformt ist, dass das remittierte Lichtstrahlenbündel (20) zumindest zwischen der
ersten und zweiten Reflexionsfläche (26, 28) im Inneren des Körpers (138) verläuft, und
**dass** die erste und zweite Reflexionsfläche (26, 28) durch eine jeweilige Innenwandung des Körpers (138) gebildet sind.

2. Optoelektronischer Sensor nach Anspruch 1,
**dadurch gekennzeichnet,**
**dass** die zweite Reflexionsfläche (28) gekrümmt, insbesondere konvex, ist.

3. Optoelektronischer Sensor nach Anspruch 1 oder 2,
**dadurch gekennzeichnet,**
**dass** die erste und die zweite Reflexionsfläche (26, 28) starr miteinander verbunden sind.

4. Optoelektronischer Sensor nach einem der vorhergehenden Ansprüche,
**dadurch gekennzeichnet,**
**dass** die erste und die zweite Reflexionsfläche (26, 28) eine jeweilige Brennweite aufweisen, wobei die genannten Brennweiten derart gewählt sind, dass ein auf die erste Reflexionsfläche (26) auftreffendes paralleles Eintrittslichtstrahlenbündel (34) durch die zweite Reflexionsfläche (28) in ein ebenfalls paralleles Austrittslichtstrahlenbündel (26) umgelenkt wird.

5. Optoelektronischer Sensor nach einem der vorhergehenden Ansprüche,
**dadurch gekennzeichnet,**
**dass** sich ein auf die erste Reflexionsfläche (26) auftreffendes Eintrittslichtstrahlenbündel (34) und ein von der zweiten Reflexionsfläche (28) umgelenktes Austrittslichtstrahlenbündel (36) sich entlang eines jeweiligen Teilabschnitts der optischen Achse (O) der Ablenkeinheit (22, 122, 222, 322) ausbreiten, und dass die erste und die zweite Reflexionsfläche (26, 28) derart zueinander ausgerichtet sind, dass der dem Eintrittslichtstrahlenbündel (34) zugeordnete Teilabschnitt der optischen Achse (O) und der dem Austrittslichtstrahlenbündel (36) zugeordnete Teilabschnitt der optischen Achse (O) in einem rechten Winkel zueinander stehen.

6. Optoelektronischer Sensor nach Anspruch 5,
**dadurch gekennzeichnet,**
**dass** der dem Austrittslichtstrahlenbündel (36) zugeordnete Teilabschnitt der optischen Achse (O) parallel zur Rotationsachse (R) verläuft.

7. Optoelektronischer Sensor nach einem der vorhergehenden Ansprüche,
**dadurch gekennzeichnet,**
**dass** zwischen der zweiten Reflexionsfläche (28) und dem Lichtempfänger (18) eine Empfangsoptik (32) angeordnet ist, welche das von der zweiten Reflexionsfläche umgelenkte Lichtstrahlenbündel (20) auf den Lichtempfänger (18) fokussiert.

8. Optoelektronischer Sensor nach Anspruch 7,
**dadurch gekennzeichnet,**
**dass** die optische Achse der Empfangsoptik (32) mit der Rotationsachse (R) zusammenfällt.

9. Optoelektronischer Sensor nach einem der vorhergehenden Ansprüche,
**dadurch gekennzeichnet,**
**dass** die Ablenkeinheit (22, 122, 222, 322) ferner eine dritte Reflexionsfläche (46) zur Umlenkung des von dem Lichtsender (12) ausgesandten Lichtstrahlenbündels (14) in den Überwachungsbereich (16) aufweist, wobei die Rotationsachse (R) insbesondere durch die dritte Reflexionsfläche (46) hindurch verläuft, bevorzugt unter einem Winkel von 45°.

10. Optoelektronischer Sensor nach einem der vorhergehenden Ansprüche,
**dadurch gekennzeichnet,**
**dass** der transparente Körper (138) ferner ein strahlformendes Lichteintrittsfenster für das remittierte Lichtstrahlenbündel (20) und/oder ein strahlformendes Lichtaustrittsfenster für das remittierte Lichtstrahlenbündel (20) aufweist.

11. Optoelektronischer Sensor nach einem der vorhergehenden Ansprüche,
**dadurch gekennzeichnet,**
**dass** die Ablenkeinheit (22, 122, 222, 322) ferner eine dritte Reflexionsfläche (46) zur Umlenkung des von dem Lichtsender (12) ausgesandten Lichtstrahlenbündels (14) in den Überwachungsbereich (16) aufweist, wobei die dritte Reflexionsfläche (46) an einer dritten Wandung des Körpers (138) vorgesehen ist.

12. Optoelektronischer Sensor nach einem der vorhergehenden Ansprüche,
**dadurch gekennzeichnet,**
**dass** die erste, die zweite und/oder die dritte Reflexionsfläche (26, 28, 46) ferner eine auf der jeweils zugeordneten Wandung aufgebrachte reflektierende Beschichtung umfasst.

## Claims

1. An optoelectronic sensor (10) comprising
a light transmitter (12) for transmitting a beam of light rays (14) into a monitored zone (16);
a light receiver (18) for generating a received signal from the beam of light rays (20) remitted by the objects in the monitored zone (16); a deflection unit (22, 122, 222, 322) which is rotatable about an axis of rotation (R) and which has a concave first reflection surface (26) for beam shaping and for deflecting the remitted beam of light rays (20), and
an evaluation unit (30) which is configured to acquire information on the objects in the monitored zone (16) from the received signal, wherein the rotatable deflection unit (22, 122, 222, 322) has a second reflection surface (28) for deflecting the beam of light rays (20) deflected by the first reflection surface (26) to the light receiver (18),
**characterised**
**in that** the deflection unit (22, 122, 222, 322) comprises a monolithic body (138), with the first reflection surface (26) comprising a first wall of the body (138) and the second reflection surface (28) comprising a second wall of the body (138) disposed opposite the first wall;
**in that** the body (138) is transparent and is shaped such that the remitted beam of light rays (20) extends at least between the first and second reflection surfaces (26, 28) in the interior of the body (138); and
**in that** the first and second reflection surfaces (26, 28) are formed by a respective inner wall of the body (138).

2. An optoelectronic sensor in accordance with claim 1,
**characterised in that**
the second reflection surface (28) is curved, in particular convex.

3. An optoelectronic sensor in accordance with claim 1 or claim 2,
**characterised in that**
the first and second reflection surfaces (26, 28) are rigidly connected to one another.

4. An optoelectronic sensor in accordance with any one of the preceding claims,
**characterised in that**
the first and second reflection surfaces (26, 28) have a respective focal length, with the named focal lengths beings selected such that a parallel entry beam of light rays (34) incident onto the first reflection surface (26) is deflected by the second reflection surface (28) into a likewise parallel exit beam of light rays (26).

5. An optoelectronic sensor in accordance with any one of the preceding claims,
**characterised in that**
an entry beam of light rays (34) incident onto the first reflection surface (26) and an exit beam of light rays (36) deflected by the second reflection surface (28) propagate along a respective part section of the optical axis (O) of the deflection unit (22, 122, 222, 322); and **in that** the first and second reflection surfaces (26, 28) are aligned with one another such that the part section of the optical axis (O) associated with the entry beam of light rays (34) and the part section of the optical axis (O) associated with the exit beam of light rays (36) are at a right angle to one another.

6. An optoelectronic sensor in accordance with claim 5,
**characterised in that**
the part section of the optical axis (O) associated with the exit beam of light rays (36) extends in parallel with the axis of rotation (R).

7. An optoelectronic sensor in accordance with any one of the preceding claims,
**characterised in that**
a reception optics (32) is arranged between the second reflection surface (28) and the light receiver (18) and focuses the beam of light rays (20) deflected by the second reflection surface onto the light receiver (18).

8. An optoelectronic sensor in accordance with claim 7,
**characterised in that**
the optical axis of the reception optics (32) coincides with the axis of rotation (R).

9. An optoelectronic sensor in accordance with any one of the preceding claims,
**characterised in that**
the deflection unit (22, 122, 222, 322) furthermore has a third reflection surface (46) for deflecting the beam of light rays (14) transmitted by the light transmitter (12) into the monitored zone (16), with the axis of rotation (R) in particular extending through the third reflection surface (46), preferably at an angle of 45°.

10. An optoelectronic sensor in accordance with any one of the preceding claims,
**characterised in that**
the transparent body (138) furthermore has a beam-shaping light entry window for the remitted beam of light rays (20) and/or has a beam-shaping light exit window for the remitted beam of light rays (20).

11. An optoelectronic sensor in accordance with any one of the preceding claims,
**characterised in that**
the deflection unit (22, 122, 222, 322) furthermore has a third reflection surface (46) for deflecting the beam of light rays (14) transmitted by the light transmitter (12) into the monitored zone (16), with the third reflection surface (46) being provided at a third wall of the body (138).

12. An optoelectronic sensor in accordance with any one of the preceding claims,
**characterised in that**
the first, the second and/or the third reflection surfaces (26, 28, 46) furthermore comprise a reflective coating applied to the respective associated wall.

## Revendications

1. Capteur optoélectronique (10) comprenant
un émetteur de lumière (12) pour émettre un faisceau de rayons de lumière (14) vers une zone de surveillance (16),
un récepteur de lumière (18) pour engendrer un signal de réception à partir du faisceau de rayons de lumière (20) réémis depuis des objets dans la zone de surveillance (16),
une unité de déflexion (22, 122, 222, 322) en rotation autour d'un axe de rotation (R), qui comporte une première surface de réflexion concave (26) pour la mise en forme des rayons et pour dévier le faisceau de rayons de lumière réémis (20), et
une unité d'évaluation (30) qui est réalisée pour récupérer à partir du signal de réception des informations sur les objets dans la zone de surveillance (16),
dans lequel l'unité de déflexion rotative (22, 122, 222, 322) comporte une seconde surface de réflexion (28) pour dévier vers le récepteur de lumière (18) le faisceau de rayons de lumière (20) dévié par la première surface de réflexion (26),
**caractérisé en ce que**
l'unité de déflexion (22, 122, 222, 322) comprend un corps monolithique (138), dans lequel la première surface de réflexion (26) inclut une première paroi du corps (138) et la seconde surface de réflexion (28) inclut une seconde paroi du corps (138) à l'opposé de la première paroi,
**en ce que** le corps (138) est transparent et conformé de telle façon que le faisceau de rayons de lumière réémis (20) passe dans l'intérieur du corps (138) au moins entre la première et la seconde surface de réflexion (26, 28), et
**en ce que** la première et la seconde surface de réflexion (26, 28) sont formées par une paroi intérieure respective du corps (138).

2. Capteur optoélectronique selon la revendication 1,
**caractérisé en ce que** la seconde surface de réflexion (28) est incurvée, en particulier convexe.

3. Capteur optoélectronique selon la revendication 1 ou 2,
**caractérisé en ce que** la première et la seconde surface de réflexion (26, 28) sont reliées rigidement l'une avec l'autre.

4. Capteur optoélectronique selon l'une des revendications précédentes,
**caractérisé en ce que** la première et la seconde surface de réflexion (26, 28) présentent une distance focale respective, lesdites distances focales étant choisies de telle façon qu'un faisceau de rayons de lumière entrant (34) parallèle tombant sur la première surface de réflexion (26) est dévié par la seconde surface de réflexion (28) en un faisceau de rayons de lumière sortant (26) également parallèle.

5. Capteur optoélectronique selon l'une des revendications précédentes,
**caractérisé en ce qu'**un faisceau de rayons de lumière entrant (34) qui tombe sur la première surface de réflexion (26) et un faisceau de rayons de lumière sortant (36) qui est dévié par la seconde surface de réflexion (28) se propagent le long d'un tronçon partiel respectif de l'axe optique (O) de l'unité de déflexion (22, 122, 222, 322), et **en ce que** la première et la seconde surface de réflexion (26, 28) sont orientées l'une par rapport à l'autre de telle manière que le tronçon partiel, associé au faisceau de rayons de lumière entrant (34), de l'axe optique (O), et le tronçon partiel, associé au faisceau de rayons de lumière sortant (36), de l'axe optique (O) forment un angle droit l'un par rapport à l'autre.

6. Capteur optoélectronique selon la revendication 5,
**caractérisé en ce que** le tronçon partiel, associé au faisceau de rayons de lumière sortant (36), de l'axe optique (O) s'étend parallèlement à l'axe de rotation (R).

7. Capteur optoélectronique selon l'une des revendications précédentes,
**caractérisé en ce qu'**une optique de réception (32) est agencée entre la seconde surface de réflexion (28) et le récepteur de lumière (18), optique qui focalise sur le récepteur de lumière (18) le faisceau de rayons de lumière (20) dévié par la seconde surface de réflexion.

8. Capteur optoélectronique selon la revendication 7,
**caractérisé en ce que** l'axe optique de l'optique de réception (32) coïncide avec l'axe de rotation (R).

9. Capteur optoélectronique selon l'une des revendications précédentes,
**caractérisé en ce que** l'unité de déflexion (22, 122, 222, 322) comporte en outre une troisième surface de réflexion (46) pour dévier vers la zone de surveillance (16) le faisceau de rayons de lumière (14) émis par l'émetteur de lumière (12), dans lequel l'axe de rotation (R) traverse en particulier la troisième surface de réflexion (46), de préférence sous un angle de 45°.

10. Capteur optoélectronique selon l'une des revendications précédentes,
**caractérisé en ce que** le corps transparent (138) comprend en outre une fenêtre d'entrée de lumière qui met en forme les rayons pour le faisceau de rayons de lumière réémis (26), et/ou une fenêtre de sortie de lumière qui met en forme les rayons pour le faisceau de rayons de lumière réémis (20).

11. Capteur optoélectronique selon l'une des revendications précédentes,
**caractérisé en ce que** l'unité de déflexion (22, 122, 222, 322) comporte en outre une troisième surface de réflexion (46) pour dévier vers la zone de surveillance (16) le faisceau de rayons de lumière (14) émis par l'émetteur de lumière (16), dans lequel la troisième surface de réflexion (46) est prévue sur une troisième paroi du corps (138).

12. Capteur optoélectronique selon l'une des revendications précédentes,
**caractérisé en ce que** la première, la seconde et/ou la troisième surface de réflexion (26, 28, 46) comportent en outre un revêtement réfléchissant appliqué sur la paroi respectivement associée.
